# EUROPÄISCHE PATENTSCHRIFT

(11) **EP 1 525 156 B1**
(45) Veröffentlichungstag und Bekanntmachung des Hinweises auf die Patenterteilung: **03.01.2007**
(21) Anmeldenummer: 03783965.1
(22) Anmeldetag: 10.05.2003
(51) Int. Cl.: C01B 17/04

(54) **SPALTREAKTOR FÜR EINE CLAUS-ANLAGE**
CRACKING REACTOR FOR A CLAUS PLANT
REACTEUR DE CRAQUAGE POUR INSTALLATION CLAUS

(30) Priorität: 25.07.2002 DE 10233820
(43) Veröffentlichungstag der Anmeldung: 27.04.2005
(73) Patentinhaber: Uhde GmbH, 44141 Dortmund (DE)
(72) Erfinder: THIELERT, Holger, 44379 Dortmund (DE)
(74) Vertreter: Albrecht, Rainer Harald
(86) Internationale Anmeldenummer: PCT/EP2003/004898
(87) Internationale Veröffentlichungsnummer: WO 2004/014791

(56) Entgegenhaltungen:
- EP-A- 0 811 417
- WO-A-01/09032
- DE-A- 3 708 957
- US-A- 4 501 725

## Beschreibung

Die Erfindung betrifft einen Spaltreaktor für eine Claus-Anlage mit einem feuerfest ausgekleideten Kessel, der eine Brennkammer mit einer Einströmöffnung für ein Gemisch aus Heizgas, Luft und H₂S enthaltendes Sauergas, einen Katalysatorraum mit einer Katalysatorschüttung und einen abströmseitigen Raum mit einem Gasauslass für heißes, elementaren Schwefel enthaltendes Prozessgas aufweist.

In einer Claus-Anlage wird Schwefelwasserstoff in elementaren Schwefel umgewandelt, der durch Kühlung des Prozessgasstromes kondensiert und abgeschieden wird. Eine Claus-Anlage besteht in ihrem grundsätzlichen Aufbau aus dem eingangsbeschriebenen Spaltreaktor, einem Abhitzekessel sowie mindestens einer Katalysatorstufe. Eine H₂S enthaltendes Sauergas wird zusammen mit Luft und Heizgas in die Brennkammer des Spaltreaktors geleitet. Hier wird in einer exothermen Reaktion an der Katalysatorschüttung etwa 60-70 % des Schwefelwasserstoffes zu Schwefel umgesetzt. Das Prozessgas verlässt mit einer Temperatur von ca. 1200 °C den Spaltreaktor und wird im Abhitzekessel auf eine Temperatur unterhalb von 170 °C abgekühlt. Nach Abscheidung des kondensierenden Schwefels wird das Prozessgas wieder erwärmt und der Katalysatorstufe zugeführt, in der bei einer Arbeitstemperatur unterhalb von 300 °C Schwefelwasserstoff, der im Prozessgas noch enthalten ist, in elementaren Schwefel umgewandelt wird.

Im Rahmen der bekannten Maßnahmen wird als Spaltreaktor ein vertikaler Schachtofen eingesetzt, der an seinem oberen Ende eine Brennkammer und unterhalb der Brennkammer ein Bett aus einer losen Katalysatorschüttung aufweist. Der von oben nach unten durchströmte Ofen besitzt eine große Höhe. Aus Stabilitätsgründen ist ein aufwendiges Ofengerüst zur Aufnahme der auf den Ofen wirkenden Windlast erforderlich. Ferner besteht das Problem, dass Flammen aus der Brennkammer bis zur Katalysatorschüttung durchschlagen können, wobei der Katalysator geschädigt wird.

Der Erfindung liegt die Aufgabe zugrunde, den anlagentechnischen Aufwand für den Spaltreaktor einer Claus-Anlage zu reduzieren. Der Spaltreaktor soll bei einem kompakten Aufbau funktionssicher arbeiten.

Zur Lösung dieser Aufgabe lehrt die Erfindung, dass der Kessel als liegender zylindrischer Kessel ausgebildet ist, in welchem die Brennkammer, der Katalysatorraum und der abströmseitige Raum nebeneinander angeordnet sind, und dass der Katalysatorraum in Strömungsrichtung beidseitig von gasdurchlässigen Gittersteinen begrenzt ist sowie eine mantelseitige Füllöffnung zum Einbringen der Katalysatorschüttung aufweist. Vorzugsweise sind die Einströmöffnung und der Gasauslass an gegenüberliegenden Stirnseiten des Kessels angeordnet. Die Erfindung beruht auf der Erkenntnis, dass eine liegende Anordnung des Spaltreaktors verwirklicht werden kann, wenn die Katalysatorschüttung in einen beidseitig von gasdurchlässigen Gittersteinen begrenzten Katalysatorraum eingebracht wird. Durch die erfindungsgemäße Anordnung ergeben sich beachtliche Vorteile. Der Spaltreaktor kann kompakt mit einer kurzen Brennkammer ausgebildet werden, da die gasdurchlässigen Gittersteine aus einem feuerfesten Material ein Durchschlagen von Flammen aus der Brennkammer bis zur Katalysatorschüttung wirksam verhindern. Durch die liegende Anordnung des Kessels entfallen ferner statische Probleme bei der Aufstellung des Spaltreaktors. Ein Ofengerüst zur Aufnahme von Windlasten entfällt. Gemäß einer bevorzugten Ausführung der Erfindung enthalten die aus feuerfesten Materialen bestehenden Gittersteine Langlöcher, die sich nicht durch die zumeist kugelförmigen Katalysatoren zusetzen können.

In weiterer Ausgestaltung des Spaltreaktors lehrt die Erfindung, dass am Umfang des abströmseitigen Raumes eine feuerfest ausgekleidete Abzweigleitung angeschlossen ist, die in eine zum Kessel benachbarte und von einem kühleren Prozessgas durchströmte Prozessgasleitung einmündet. Im Mündungsbereich der Abzweigleitung ist ein Ventilkörper verstellbar angeordnet, mit dem der Mengenstrom eines aus der Abzweigleitung austretenden heißen Gasstromes regelbar ist. Das durch die Prozessgasleitung geführte kühlere Prozessgas kühlt dabei den Ventilkörper und eine dem Ventilkörper zugeordnete Stelleinrichtung, so dass für den Ventilkörper und die Stelleinrichtung übliche metallische Werkstoffe verwendet werden können.

Weitere Ausgestaltungen sind im nachgeordneten Patentanspruch 5 beschrieben und werden im folgenden anhand eines Ausführungsbeispiels beschrieben. Es zeigen schematisch
- Fig. 1: eine Claus-Anlage mit einem erfindungsgemäß ausgebildeten Spaltreaktor,
- Fig. 2: den Spaltreaktor in einer gegenüber Fig. 1 vergrößerten Darstellung.

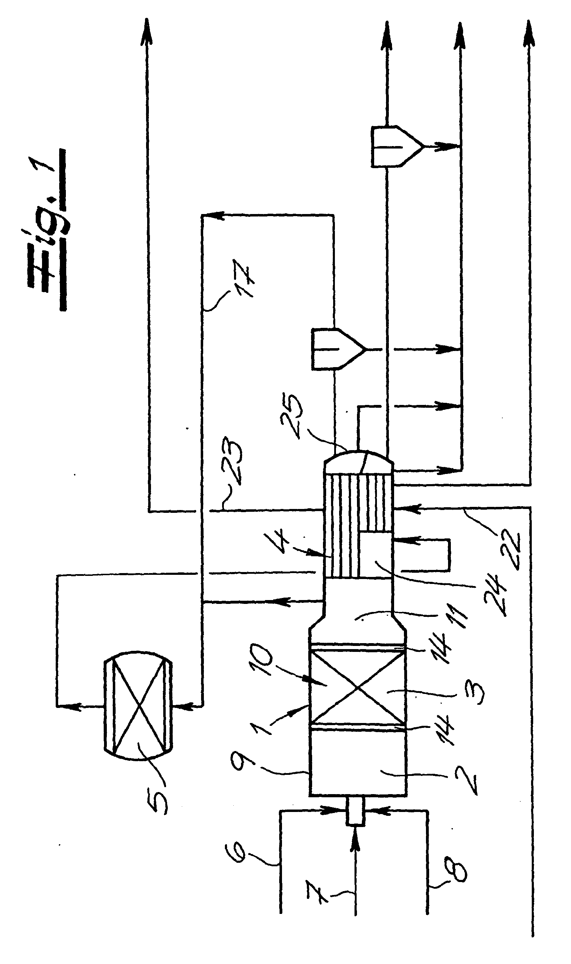

In der in Fig. 1 dargestellten Claus-Anlage wird Schwefelwasserstoff in elementaren Schwefel umgewandelt. Zum grundsätzlichen Aufbau der Anlage gehören ein Spaltreaktor 1 mit einer Brennkammer 2 und einer Katalysatorschüttung 3, ein an den Gasauslass des Spaltreaktors 1 angeschlossener Abhitzekessel 4 sowie mindestens eine Katalysatorstufe 5. Ein Schwefelwasserstoff enthaltendes Sauergas 6 wird zusammen mit Luft 7 und Heizgas 8 in die Brennkammer 2 des Spaltreaktors 1 eingeführt. In einer exothermen Reaktion wird ein Teil des Schwefelwasserstoffes an den Katalysatoren in elementaren Schwefel umgewandelt. Das Prozessgas verlässt den Spaltreaktor 1 mit einer Temperatur von ca. 1200 °C und wird im Abhitzekessel 4 auf eine zur Kondensation des Schwefels erforderliche Temperatur von weniger als 170 °C abgekühlt. Der kondensierende Schwefel wird abgeschieden. Nach Abscheidung des Schwefels wird das gekühlte Prozessgas erwärmt und der Katalysatorstufe 5 zugeführt, in der Schwefelverbindungen an einem Katalysator in elementaren Schwefel umgesetzt werden. Die Katalysatorstufe 5 wird bei einer Temperatur von weniger als 300 °C betrieben. Das die Katalysatorstufe 5 verlassene Prozessgas wird ebenfalls in dem Abhitzekessel 4 auf die zur Kondensation des Schwefels erforderliche Temperatur abgekühlt, und der kondensierte Schwefel wird ausgeschieden.

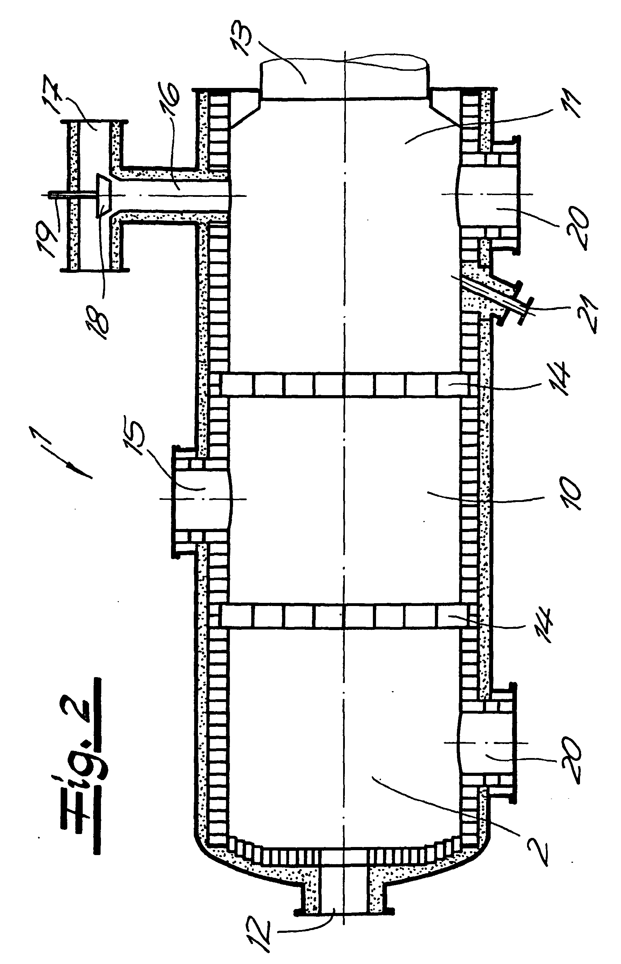

Einer vergleichenden Betrachtung der Figuren 1 und 2 entnimmt man, dass der Spaltreaktor 1 aus einem feuerfest ausgekleideten liegenden zylindrischen Kessel 9 besteht, in welchem die Brennkammer 2, ein Katalysatorraum 10 für die Katalysatorschüttung 3 sowie ein abströmseitiger Raum 11 nebeneinander angeordnet sind. An den gegenüberliegenden Stirnseiten des Kessels 9 sind eine Einströmöffnung 12 für ein Gemisch aus Heizgas, Luft und H₂S enthaltendes Sauergas sowie ein Gasauslass 13 für heißes, elementaren Schwefel enthaltendes Prozessgas angeordnet. Der Katalysatorraum 10 ist beidseitig von gasdurchlässigen Gittersteinen 14 aus feuerfestem Material begrenzt und weist eine mantelseitige Füllöffnung 15 zum Einbringen der Katalysatorschüttung auf. Die Gittersteine 14 enthalten zweckmäßig Langlöcher. Am Umfang des abströmseitigen Raums ist eine feuerfest ausgekleidete Abzweigleitung 16 angeschlossen, die in eine zum Kessel benachbarte Prozessgasleitung 17 einmündet. Die Prozessgasleitung 17 verbindet den Gasauslass des Abhitzekessels 4 mit der Katalysatorstufe 5 und wird von einem Prozessgas durchströmt, dass mit einer Temperatur von weniger als 170 °C aus dem Abhitzekessel 4 austritt und vor Eintritt in die Katalysatorstufe 5 auf eine Arbeitstemperatur zwischen 210 °C und 250 °C erwärmt wird. Die Erwärmung erfolgt durch Zumischen von heißem Prozessgas, dass durch die Abzweigleitung 16 zuströmt. Im Mündungsbereich der Abzweigleitung 16 ist ein Ventilkörper 18 verstellbar angeordnet, mit dem der Mengenstrom des aus der Abzweigleitung 16 austretenden heißen Gasstromes regelbar ist. Der Ventilkörper 18 und eine dem Ventilkörper zugeordnete Stelleinrichtung 19 wird von dem durch die Prozessgasleitung 17 strömenden kühleren Prozessgas gekühlt, so dass übliche metallische Werkstoffe verwendet werden können.

Der Spaltreaktor weist ferner Reinigungs- und Inspektionsöffnungen 20 sowie einen Zugang 21 für eine Temperaturmesseinrichtung auf.

Der Abhitzekessel 4 weist einen von einem druckfesten Mantel umgebenen Dampferzeugerraum auf, an den eine Zuführeinrichtung 22 für Kesselspeisewasser sowie eine Abzugseinrichtung 23 für niedergespannten Dampf angeschlossen sind. Der Abhitzekessel 4 enthält ein langes Rohrbündel aus Wärmetauscherrohren, die sich durch den Dampferzeugerraum erstrecken und an beiden Enden in Rohrböden eingesetzt sind, welche den Dampferzeugerraum begrenzen. Ferner ist mindestens ein weiteres Rohrbündel aus kürzeren Wärmetauscherrohren vorgesehen, die an ihrem austrittseitigen Ende ebenfalls in den Rohrboden eingesetzt sind und an ihrem eintrittseitigen Ende in eine Einströmkammer 24 münden. Das lange Rohrbündel wird von dem aus dem Spaltreaktor austretenden heißen Prozessgas durchströmt. die Einströmkammer 24 ist innerhalb des Dampferzeugerraums angeordnet und wird von einem kühleren Prozessgas aus der Katalysatorstufe 5 beaufschlagt. Der Abhitzekessel 4 weist ferner ein Kopfstück 25 auf, dass am austrittseitigen Ende an den Rohrboden anschließt und in Sektionen unterteilt ist. Jeder Sektion des Kopfstückes 25 ist jeweils ein Rohrbündel zugeordnet. An die Sektionen sind Einrichtungen zur Ableitung von kondensiertem Schwefel angeschlossen.

## Patentansprüche

1. Spaltreaktor für eine Claus-Anlage mit einem feuerfest ausgekleideten Kessel (9), der eine Brennkammer (2) mit einer Einströmöffnung (12) für ein Gemisch aus Heizgas, Luft und H₂S enthaltendes Sauergas, einen Katalysatorraum (10) mit einer Katalysatorschüttung (3) und einen abströmseitigen Raum (11) mit einem Gasauslass (13) für heißes, elementaren Schwefel enthaltendes Prozessgas aufweist, **dadurch gekennzeichnet, dass** der Kessel (9) als liegender zylindrischer Kessel ausgebildet ist, in welchem die Brennkammer (2), der Katalysatorraum (10) und der abströmseitige Raum (11) nebeneinander angeordnet sind und dass der Katalysatorraum (10) in Strömungsrichtung beidseitig von gasdurchlässigen Gittersteinen (14) begrenzt ist sowie eine mantelseitige Füllöffnung (15) zum Einbringen der Katalysatorschüttung (3) aufweist.

2. Spaltreaktor nach Anspruch 1, **dadurch gekennzeichnet, dass** die Einströmöffnung (12) und der Gasauslass (13) an gegenüberliegenden Stirnseiten des Kessels (9) angeordnet sind.

3. Spaltreaktor nach Anspruch 1 oder 2, **dadurch gekennzeichnet, dass** die Gittersteine (14) Langlöcher enthalten.

4. Spaltreaktor nach einem der Ansprüche 1 bis 2, **dadurch gekennzeichnet, dass** am Umfang des abströmseitigen Raumes (11) eine feuerfest ausgekleidete Abzweigleitung (16) angeschlossen ist, die in eine zum Kessel (9) benachbarte Prozessgasleitung (17) einmündet, dass im Mündungsbereich der Abzweigleitung (16) ein Ventilkörper (18) verstellbar angeordnet ist, mit dem der Mengenstrom eines aus der Abzweigleitung (16) austretenden heißen Gasstromes regelbar ist, und dass die Prozessgasleitung (17) von einem kühleren Prozessgas durchströmt ist, welches den Ventilkörper (18) und eine dem Ventilkörper zugeordnete Stelleinrichtung (19) kühlt.

5. Spaltreaktor nach Anspruch 4, **dadurch gekennzeichnet, dass** an den Gasauslass (13) ein Abhitzekessel (4) angeschlossen ist, in den das aus dem Kessel (9) austretende heiße Prozessgas zur Kondensation von elementarem Schwefel abgekühlt und Dampf erzeugt wird, und dass die Abzweigleitung (16) in eine Prozessgasleitung (17) einmündet, die mit dem Abhitzekessel (4) verbunden ist und das abgekühlte Prozessgas einer Katalysatorstufe (5) der Claus-Anlage zuführt.

## Claims

1. Cracking reactor for a Claus plant, comprising a boiler (9) lined with refractory material, which comprises a combustion chamber (2) having an inflow opening (12) for a mixture of heating gas, air and acid gas containing H₂S, a catalyst chamber (10) having a catalyst bed (3), and an outflow-side chamber (11) having a gas outlet (13) for hot process gas containing elemental sulphur, **characterised in that** the boiler (9) is configured as a horizontal cylindrical boiler, in which the combustion chamber (2), the catalyst chamber (10) and the outflow-side chamber (11) are disposed next to one another, and **in that** the catalyst chamber (10) is delimited on both sides in the flow direction by gas-permeable checker bricks (14), and has a fill opening (15) on the mantle side for introducing the catalyst bed (3).

2. Cracking reactor according to Claim 1, **characterised in that** the inflow opening (12) and the gas outlet (13) are disposed at opposite ends of the boiler (9).

3. Cracking reactor according to Claim 1 or 2, **characterised in that** the checker bricks (14) contain elongated holes.

4. Cracking reactor according to one of Claims 1 to 2, **characterised in that** a branch line (16) lined with refractory material is connected to the circumference of the outflow-side chamber (11), which branch line opens into a process gas line (17) adjacent to the boiler (9), **in that** a valve body (18) is disposed in an adjustable manner in the opening region of the branch line (16), which valve body can be used to regulate the quantitative flow of a hot gas stream that exits from the branch line (16), and **in that** a cooler process gas flows through the process gas line (17), which cools the valve body (18) and an adjustment device (19) assigned to the valve body.

5. Cracking reactor according to Claim 4, **characterised in that** a waste heat boiler (4) is connected to the gas outlet (13), in which waste heat boiler the hot process gas that exits from the boiler (9) is cooled for the condensation of elemental sulphur, and steam is generated, and **in that** the branch line (16) opens into a process gas line (17) which is connected to the waste heat boiler (4) and feeds the cooled process gas to a catalyst stage (5) of the Claus plant.

## Revendications

1. Réacteur de craquage destiné à une unité Claus, comportant une cuve à revêtement réfractaire (9) qui comprend une chambre de combustion (2) dotée d'une ouverture d'entrée (12) pour un mélange de gaz de chauffage, d'air et de gaz acide contenant du H₂S, un espace de catalyse (10) doté d'un lit de catalyse (3) et un espace côté aval (11) doté d'une sortie de gaz (13) destinée à du gaz de procédé, chaud, contenant du soufre élémentaire, **caractérisé en ce que** la cuve (9) est réalisée en cuve cylindrique horizontale, dans laquelle la chambre de combustion (2), l'espace de catalyse (10) et l'espace côté aval (11) sont juxtaposés et **en ce que** l'espace de catalyse (10) est limité dans la direction d'écoulement, des deux côtés, par des briques perforées (14) perméables aux gaz et comporte également un ouverture de remplissage (15) du côté enveloppe pour introduire le lit de catalyse (3).

2. Réacteur de craquage selon la revendication 1, **caractérisé en ce que** l'ouverture d'entrée (12) et la sortie de gaz (13) sont disposées sur des côtés frontaux opposés de la cuve (9).

3. Réacteur de craquage selon la revendication 1 ou 2 **caractérisé en ce que** les briques perforées (14) comportent des trous oblongs.

4. Réacteur de craquage selon l'une des revendications 1 à 2 **caractérisé en ce qu'**une conduite de dérivation (16) dotée d'un revêtement réfractaire, qui débouche dans une conduite de gaz de procédé (17) voisine de la cuve (9), est raccordée au pourtour de l'espace situé du côté aval (11), **en ce qu'**un corps de vanne (18), avec lequel le flux volumique d'un flux de gaz chauds sortant de la conduite de dérivation (16) peut être réglé, est disposé de façon réglable dans la zone d'embouchure de la conduite de dérivation (16), et **en ce que** la conduite de gaz de procédé (17) est parcourue par un gaz de procédé plus froid qui refroidit le corps de vanne (18) et un dispositif de réglage (19) associé au corps de vanne.

5. Réacteur de craquage selon la revendication 4, **caractérisé en ce qu'**une cuve de dissipation de chaleur, dans laquelle le gaz de procédé chaud sortant de la cuve (9) est refroidi pour faire se condenser le soufre élémentaire et de la vapeur est générée, est raccordée à la sortie de gaz (13), et **en ce que** la conduite de dérivation (16) débouche dans une conduite de gaz de procédé (17) qui est reliée à la cuve de dissipation de chaleur (4) et amène le gaz de procédé refroidi à un étage de catalyse (5) de l'unité Claus.
